# EUROPEAN PATENT APPLICATION

(11) **EP 2 187 579 A1**
(43) Date of publication of application: **19.05.2010**
(21) Application number: 08305800.8
(22) Date of filing: 13.11.2008
(51) Int. Cl.: H04L 12/56

(54) **Reconfigurable communications system**

(71) Applicant: Alcatel Lucent, 75008 Paris (FR)
(72) Inventor: Klotsche, Ralf, 75305, Neuenbürg (DE)
(74) Representative: Thibaud, Jean-Baptiste

(57) **Abstract**

A communications subsystem (20) comprises a plurality of interfaces (20.1, 20.2, 20.3), a routing data repository (29) for storing path information associating addresses to the interfaces, a packet forwarding module (25) adapted to detect a destination address of a received data packet and to switch the data packet between the interfaces as a function of the stored path information, and a routing update module (25) adapted to detect a source address (10.1) in a data packet received through a first interface (20.2) of the communications subsystem, retrieve path information relating to the source address from the routing data repository, determine that the retrieved path information associates first source address to a second interface (20.1) of the communications subsystem, and store path information in the routing data repository, wherein the path information associates the source address with the first interface instead of or in addition to the second interface.

## Description

### Field of the invention

The invention relates to the technical field of reconfigurable communications system, i.e. communications system in which topology can change, e.g. due to the mobility of some components of the system. More specifically, the invention relates to communications subsystems adapted to interconnect to each other to implement such systems.

### Background of the invention

Mobile IP is a network layer protocol that enables IP packets to be routed to a mobile terminal identified by a home IP address. In embodiments, this functionality is implemented by a home agent that receives binding updates whenever the terminal changes location within the network. All traffic intended to the mobile terminal must first go through the home agent. As a result, traffic may follow suboptimal routes resulting in a high consumption of resources. There are many variants of Mobile IP.

### Summary of the invention

It is an object of the invention to provide networking methods and systems adapted to topology reconfiguration such as mobility events.

According to an embodiment the invention, this object is achieved by a method for maintaining a routing data repository in a communications subsystem comprising a plurality of interfaces, the method comprising the steps of:
receiving a data packet through a first interface of the communications subsystem, the data packet comprising a first source address, and
retrieving path information relating to the first source address from the routing data repository,
determining that the retrieved path information associates the first source address to a second interface of the communications subsystem, and
in response to the determination, storing path information in the routing data repository, wherein the path information associates the first source address with the first interface instead of or in addition to the second interface.

Thanks to these features, the communications subsystem can generate path information that keeps track of the network position of a network element identified by the source address and forward traffic towards that network element accordingly.

In an embodiment, the method further comprises the step of sending the data packet through a default downstream interface of the communications subsystem, wherein the default downstream interface is directly or indirectly connected to a core communications subsystem.

Thanks to these features, the communications subsystem enables other subsystems, e.g. the core communications subsystem and other communications subsystems located closer to the core, to generate path information that keeps track of the network position of the network element identified by the source address and to forward traffic towards that network element accordingly.

In an embodiment of the method, the received data packet comprises a first augmented source address, the first augmented source address comprising the first source address and a first sequence of at least one intermediate subsystem identifier attached to the first source address,
wherein in the step of storing, path information which associates the first augmented source address with the first interface is stored in the routing data repository.

Thanks to these features, intermediate subsystems located between the communications subsystem and network elements identified by source addresses can be identified and their relative network positions can be tracked.

In an embodiment, the method further comprises the steps of:
retrieving path information relating to a second augmented source address from the routing data repository, wherein the second augmented source address comprises a second source address and a second sequence of at least one intermediate subsystem identifier attached to the second source address, wherein the first and second sequences comprise a same intermediate subsystem identifier,
determining that the retrieved path information associates the second augmented source address to a second interface of the communications subsystem, and in response to the determination, storing path information in the routing data repository to associate the second augmented source address with the first interface instead of or in addition to the second interface.

Thanks to these features, the communications subsystem can generate path information that keeps track of the network position of different network elements communicating through a same intermediate subsystem and forward traffic towards those network element accordingly.

In an embodiment, the method further comprises the steps of:
attaching an identifier of the communications subsystem to the first augmented source address of the received data packet to generate a further augmented source address,
sending the data packet comprising the further augmented source address through a default downstream interface of the communications subsystem, wherein the default downstream interface is directly or indirectly connected to a core communications subsystem.

Thanks to these features, the communications subsystem enables other subsystems, e.g. the core communications subsystem and other communications subsystems located closer to the core, to generate path information that keeps track of the network position of the network element identified by the source address and/or intermediate subsystems and to forward traffic accordingly.

In an embodiment, the intermediate subsystem identifier is comprised in an intermediate interface identifier. For example, intermediate interface identifers can be used as explicit destination information in a traffic packet so a to speed up forwarding decisions at intermediate subsystems.

The communications subsystem can be fixed or mobile. In preferred embodiments, a communication system in which the method is implemented comprises at least one mobile communications subsystem. Preferably, the core communications subsystem is fixed.

Advantageously, the method further comprises the steps of:
effecting a network attachment procedure between the communications subsystem and a mobile communications subsystem to set up a bidirectional communications channel between the first interface and an interface of the mobile communications subsystem, and
sending the data packet from the mobile communications subsystem to the first interface as a result of the network attachment procedure.

Thanks to these features, path information relating to a network element identified by the source address can be generated without any actual traffic being sent by that network element. Therefore even the network position of a silent subsystem can be tracked and traffic can be forwarded accordingly to that subsystem. In an embodiment, the data packet on which the method relies is a specific control packet that is processed differently from actual traffic.

Alternatively or in combination, the method for maintaining a routing data repository can also rely on data packets which are actual traffic data packets comprising both a source address and a destination address.

The invention provides also a communications subsystem comprising:
a plurality of interfaces,
a routing data repository for storing path information associating addresses to the interfaces,
a packet forwarding module adapted to detect a destination address of a received data packet and to switch the data packet between the interface as a function of the stored path information, and
a routing update module adapted to detect a source address in a data packet received through a first interface of the communications subsystem, retrieve path information relating to the source address from the routing data repository, determine that the retrieved path information associates the source address to a second interface of the communications subsystem, and store path information in the routing data repository, wherein the path information associates the source address with the first interface instead of or in addition to the second interface.

In embodiments, the communications subsystem comprises one or more of the following features:
- the plurality of interfaces comprises a default upstream interface directly or indirectly connected to a core communications subsystem, and the packet forwarding module is adapted to detect a default of path information relating to the destination address of the received data packet in the routing data repository, and to switch the data packet to the default upstream interface of the communications subsystem in response to the detection.
- the packet forwarding module is adapted to retrieve path information associating the destination address of the received data packet to an identified interface of the communications subsystem from the routing data repository, and to switch the data packet to the identified interface in response to the retrieval.
- the routing update module is adapted to send the data packet comprising the source address through the default downstream interface of the communications subsystem.

In embodiments, the default downstream interface and the default upstream interface are the same interface and a corresponding path between the communications subsystem and the core communications subsystem serves for data traffic going in both directions.

The invention provides also a communications system comprising a collection of communications subsystems, wherein the communications subsystems of the collection are interconnected by communications links binding their respective interfaces.

Aspects of the invention are based on the idea of achieving network attachment, multi-homing and mobility in one and the same functionality. Aspects of the invention are based on the idea of generating updated path information reflecting a new network topology merely in response to the binding of subsystem interfaces. Aspects of the invention are based on the idea of adapting the scope of a topology update to the object that moves, e.g. an application, a device or an entire network. In case a handover is executed the upstream traffic can be transported immediately after the successful binding to a new interface. The downstream traffic needs a path information update at a point deeper in the network structure. Aspects of the invention are based on the idea of generating such path information update by mapping a source path to a destination path on the way to the core subsystem, e.g. up to an intermediate subsystem where an old path and a new path for a downstream data packet meet.

### Brief description of the drawings

These and other aspects of the invention will be apparent from and elucidated with reference to the embodiments described hereinafter, by way of example, with reference to the drawings.
Figure 1 shows a communications network in accordance with a first embodiment.
Figure 2 is a partial view of the communications network of Figure 1 after a mobility event.
Figure 3 is a flow diagram showing a packet processing method which is executed by subsystems in the communications network of Figures 1 and 2.
Figure 4 shows a communications network in accordance with a second embodiment.
Figure 5 is a partial view of the communications network of Figure 4 after a mobility event.
Figure 6 is a flow diagram showing a packet processing method which is executed by subsystems in the communications network of Figures 4 and 5.
Figure 7 shows a network attachment method which can be executed in the communications networks of Figures 1, 2, 4 and 5.

### Detailed description of the preferred embodiments

With reference to the Figures, networking methods will now be described to illustrate different aspects of the invention. These networking methods are based on a logical representation of a communication network as a collection of interconnected subsystems organized in a way so that a hierarchical tree can be mapped to the collection. These networking methods make it possible to implement uniform methods for routing data packets and for maintaining routing data repositiories over a variety of underlying physical layer technologies and in a dynamically changing topology, e.g. where at least one of the subsystems is mobile with respect to the others.

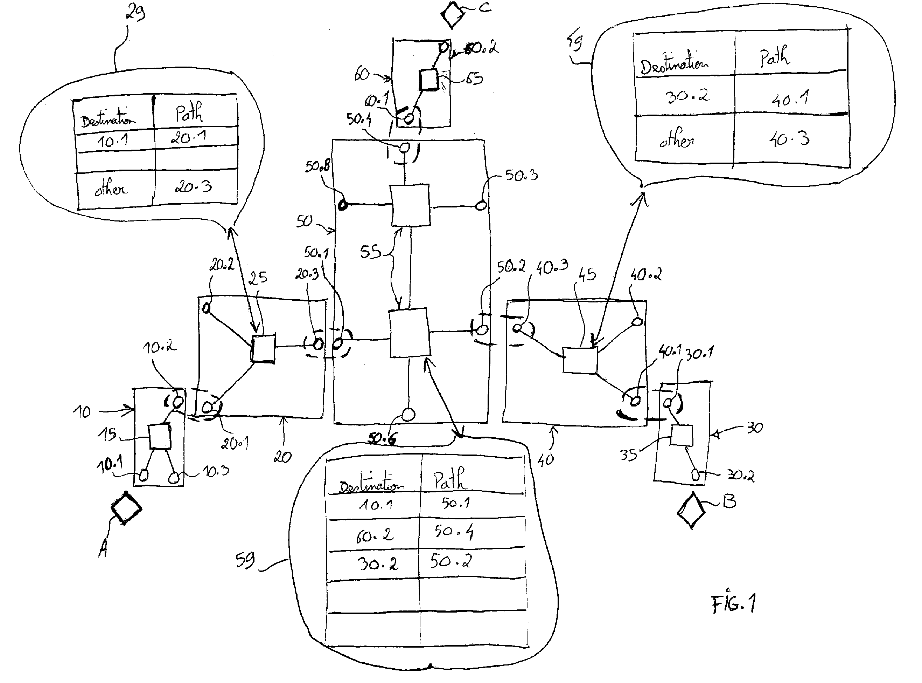

Figure 1 shows a communications network which comprises a fixed core subsystem 50 located at the root. Subsystems 20, 40 and 60 are directly connected to the core. Subsystems 10 and 30 are indirectly connected to the core through one intermediate subsystem 20, respectively 40. A subsystem as a whole can correspond to a variety of things e.g. a terminal, a network element, a closed user group, a VPN, a network domain, an access network and other. A subsystem has the following features :
- interfaces, e.g. 20.1, 20.2 and 20.3, which can bind to interfaces of other subsystems to exchange bidirectional traffic, provided that the underlying layers are compatible. The interfaces are shown as empty circles on Figure 1. The bindings are shown as dashed lines on Figure 1. One interface through which the subsystem can send and receive traffic from the core is defined as the default interface, e.g. interface 20.3 for subsystem 20.
- a routing data repository, e.g. 29, for storing path information.
- and a data processing device, e.g. 25, adapted to perform tasks such as switching or forwarding traffic between the interfaces as a function of the stored path information and maintaining the routing data repository as a function of the evolving topology of the network, e.g. mobility events. The data processing devices 15, 25, 35, 45, 55, 65 each ensure a full connectivity between the interfaces of the corresponding subsystem. Although a very simple representation has been used, a data processing device can in fact correspond to a unitary component or to a collection of distributed components, e.g. bridges, switches, routers properly configured to ensure the connetivity between all interfaces. The inner structure of the subsystems is irrelevant to the networking methods which will be described.

### First embodiment

### Forwarding of traffic

When a subsystem receives at an interface a data packet intended to a given destination address, i.e. a given interface of a given subsystem, the data processing device of a subsystem executes the following steps:
- Detecting the destination interface identifier. In the example of Figure 1, an interface identifier is constructed with the format "subsystem identifier"."local identifier". In the Figures, interface identifiers serve also as reference numerals for the interfaces and subsystem identifiers serve also as reference numerals for the subsystems.
- Searching for path information relating to the destination address in the routing data repository of the communications subsystem.
- When detecting a default of path information relating to the destination address in the routing data repository or at least when failing to retrieve such information, sending the data packet through the default interface of the communications subsystem.
- When retrieving path information identifying an interface of the communications subsystem associated to the destination address from the routing data repository, sending the data packet through the identified interface.

In the example shown in Figure 1, the path information is organized as a routing table. Each subsystem has path information relating to subsystems located downstream of it, i.e. away from the core and no path information relating to subsystems located upstream of it, i.e. towards the core. The core has path information relating to all known destinations.

For an application B attached to interface 30.2 to send a packet intended to an application A, the following steps are executed:
- B needs to find the interface to which application A is attached, i.e. interface 10.1. This can be obtained for example through a central server organized as a Domain name server, not shown.
- B sends a packet with the destination address 10.1 and source address 30.2 through interface 30.2.
- Data processing device 35 looks up the destination address in the routing data repository of subsystem 30. No path information relating to interface 10.1 is found. So device 35 forwards the packet to default interface 30.1.
- Data processing device 45 receives the packet on interface 40.1 bound to interface 30.1. Device 45 looks up the destination address in the routing data repository 49 of subsystem 40. No path information relating to interface 10.1 is found. So device 45 forwards the packet to default interface 40.3.
- Data processing device 55 receives the packet on interface 50.2 bound to interface 40.3. Device 55 looks up the destination address in the routing data repository 59 of core subsystem 50. Path information is retrieved which associates destination interface 10.1 to interface 50.1. So device 45 forwards the packet to interface 50.1.
- Data processing device 25 receives the packet on interface 20.3 bound to interface 50.1. Device 25 looks up the destination address in the routing data repository 29 of subsystem 20. Path information is retrieved which associates interface 10.1 to interface 20.1. So device 25 forwards the packet to interface 20.1.
- Data processing device 15 receives the packet on interface 10.2 bound to interface 20.1. Device 15 looks up the destination address. Interface 10.1 is known from device 15 since it is a local interface of subsystem 10. So device 25 forwards the packet to interface 10.1 where it is received by application A.
- To respond to application B, application A can use the source address of the received packet, i.e. 30.2, as a destination address.

### Updating path information

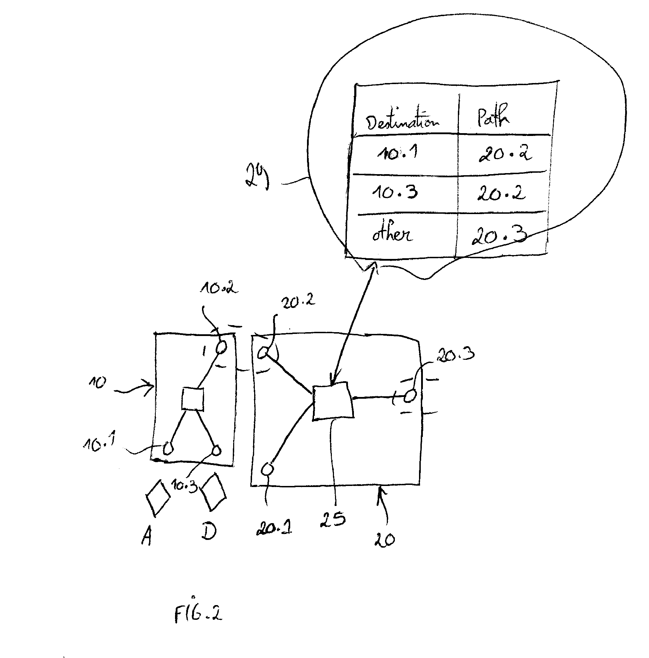

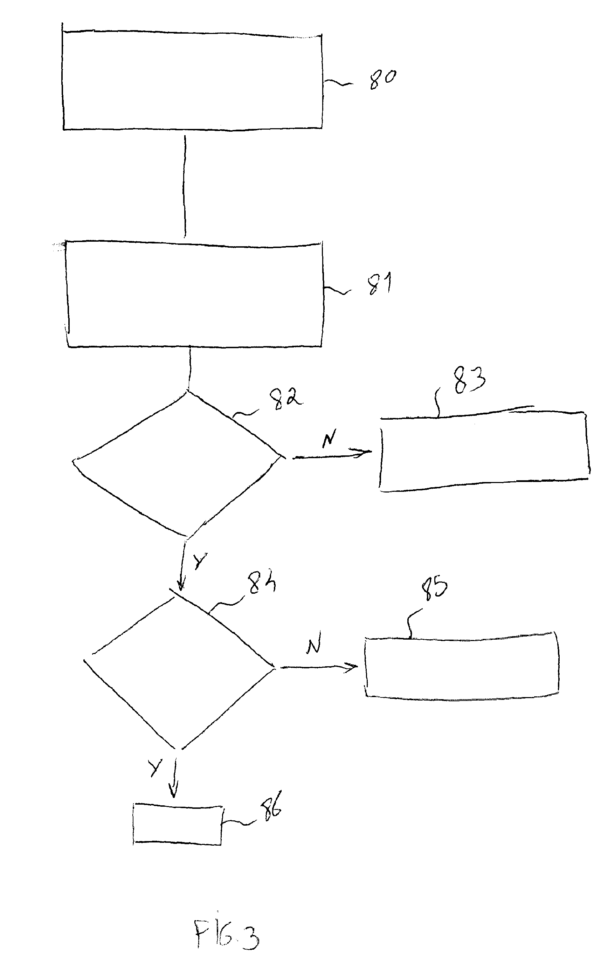

To create and maintain the data repositories shown on Figure 1, the data processing device of a subsystem executes methods which will be described in reference to Figures 2 and 3.

Figure 2 shows the network of Figure 1 after a mobility event, namely interface 10.2 of subsystem 10 detached from interface 20.1 and attached to interface 20.2 of subsystem 20. For exemple, this situation corresponds to a cell handover in which subsystem 10 is a cellular phone with a radio interface 10.2 and subsystem 20 is a cellular access infrastructure with radio interfaces 20.1 and 20.2 corresponding to two adjacent cells.

To generate the binding of interfaces 10.2 and 20.2, any type of network attachment procedure may be used. Such a procedure involves typically negociating some physical parameters and establishing a communication channel in each direction. Additionally it may involve steps relating to authentification and encryption.

After the communication channels have been established, device 25 can start to receive packets from subsystem 10 on interface 20.2. Device 25 uses the source information of the packets it receives to update the path information in the routing data repository 29.

In an embodiment, the traffic data packets are processed by device 25 for that purpose. This embodiment is applicable in an architecture in which downstream and upstream traffic follow the same path in reverse directions. In that embodiment, device 25 executes the method shown Figure 3 in respect of any traffic data packet received at an interface, except the default interface 20.3:
- Step 80: receiving a data packet at a first interface.
- Step 81: detecting the source address of the data packet.
- Step 82: looking up the source address in the data repository 29. If no path information relating to the source address can be found, go to step 83, else go to step 84.
- Step 83: generating and storing path information in the data repository to associate the source address to the first interface. In addition forward the packet to the default interface 20.3.
- Step 84: checking if path information retrieved at step 82 already associates the source address to the first interface. If not, go to step 85. Else, terminate the process at step 86 since no topology change is detected.
- Step 85: generating and storing path information in the data repository to associate the source address to the first interface instead of the other interface that was previously associated and not forwarding the packet to the default interface 20.3 since the branching point between the old path and the new path has been reached.

This process will be illustrated in the case of the first packet sent by application A, e.g. towards application B, in the network of Figure 2, i.e. after the new binding. At step 82, device 25 determines that repository 29 already stores path information associated to source address 10.1, i.e. information corresponding to Figure 1 because the topology has not been updated yet. At step 84, device 25 determines that retrieved path information associates address 10.1 to interface 20.1. At step 85, the routing table entry corresponding to address 10.1 is updated as shown on Figure 2.

Then an application D which was not previously active attaches to interface 10.3 in subsystem 10 and starts sending traffic towards a destination, e.g. a terminal attached to interface 20.1 of Figure 2 (not shown). At step 82, device 25 determines from the source address of the packet that repository 29 does not comprise any path information associated to source address 10.3. At step 83, a routing table entry corresponding to address 10.3 is generated in repository 29 as shown on Figure 2. Besides the packet is forwarded through default interface 20.3 towards core subsystem 50 so that a corresponding routing table entry can be generated in repository 59. Then core subsystem drops the packet because there is no subsystem located further upstream where a routing table entry would have to be generated for destination address 10.3.

In parallel to this packet forwarding process intended to update routing tables, device 25 also determines from the destination address of the packet that the packet must be forwarded to interface 20.1, for the purpose of traffic delivery. In this embodiment which uses source information of traffic packets to update the routing tables, the processing of the source information as shown in Figure 3 takes place in parallel to the processing of destination information previously described to forward the packet to its destination.

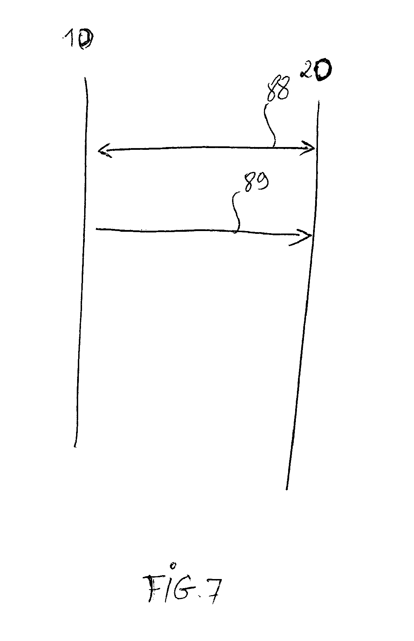

In another embodiment shown on Figure 7, specific control packets are generated as part of the binding process to update the path information. The data processing devices of the subsystem will then only execute the method of Figure 3 in respect of those control packets. This embodiment makes it unnecessary to look up the source address of every traffic packet received. This embodiment will be explained in reference to the specific situation of Figure 2.

Referring to Figures 2 and 7, at step 88, subsystems 10 and 20 establish a bidirectional channel, e.g. wireless, between interfaces 10.2 and 20.2. At step 89, device 15 generates one or more control packets to declare source addresses corresponding to all local interfaces that may currently receive traffic, e.g. 10.1 and 10.3 if applications A and D are active. To send the control packets, device 15 uses the default interface, i.e. an bidirectional interface of subsystem 10 which will also be used to receive downstream traffic intended to the declared local interfaces, e.g. interface 10.2.

In the above described embodiments, a subsystem has a single default interface which is used bidirectionnally for both sending traffic toward the core subsystem and receiving traffic from the core subsystem. In a variant of this embodiment using specific control packets, not shown, upstream and downstram traffic follow different paths. In this variant, a subsystem has several default interfaces. It uses a first default interface, referred to here as default upstream interface, to forward traffic data in the upstream direction toward the core when the destination address cannot be resolved locally. To receive traffic coming from the upstream, the same subsystem uses a second default interface, referred to here as default downstream interface. In this variant, the control packets for updating the topology are forwarded through the default downstream interface of the subsystems in order to follow the path provided for downstream traffic in the reverse direction at least up to the branching point. Hence at least the so-called default downstream interface is bidirectional, while the so-called default upstream interface could be unidirectional.

The networking protocols described above can be implemented in a variety of networks. By way of illustration, in an embodiment, subsystems 10 and 30 are mobile wireless terminals, subsystems 20 and 40 are wireless access networks and core subsystem 50 is a fixed backhauling network. In subsystems 20 and 40, a plurality of base stations or wireless access points provide the interfaces, e.g. 20.1 and 20.2 with the terminals. There may be more than one interface per base station.

### Second embodiment

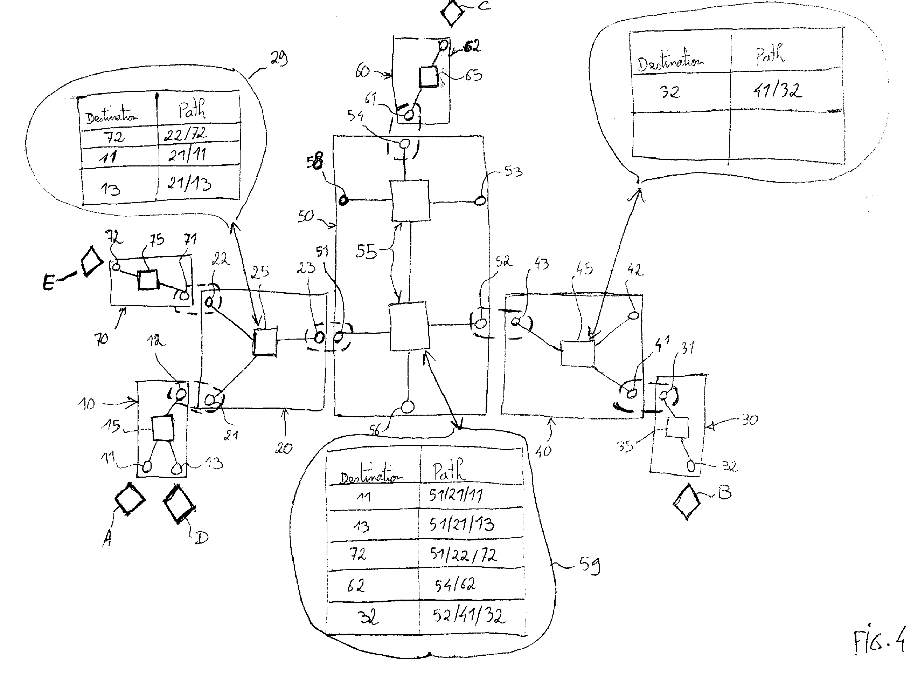

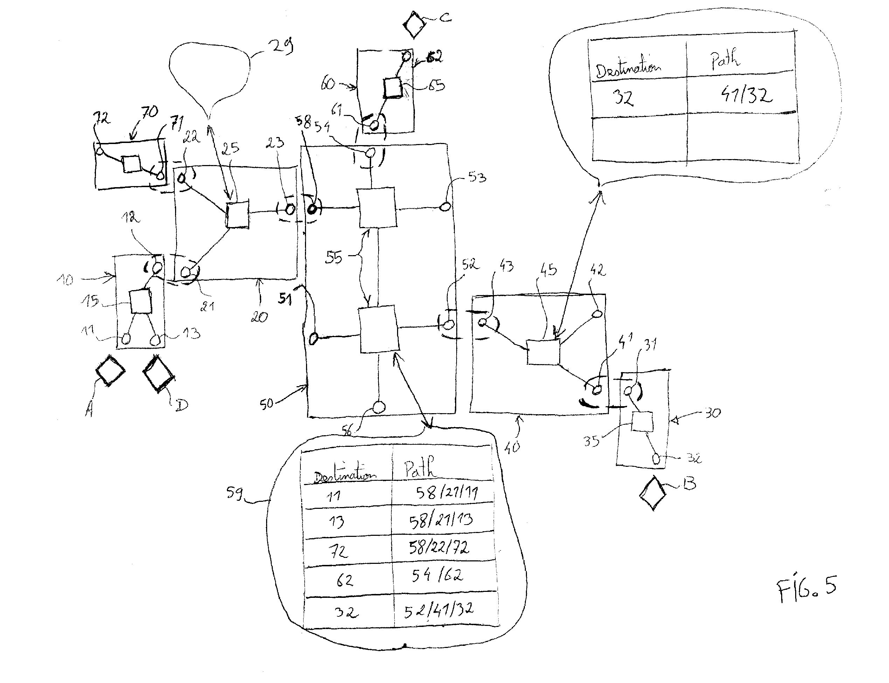

Referring now to Figures 4 to 6, a second embodiment of a network will be described. The same reference numerals are used as in Figures 1 and 2 to designate identical or similar elements. In Figures 4 and 5, interface identifiers are constructed with a different convention, namely the first digit is a subsystem identifier and the second digit is a local identifier. Other naming conventions can be used as well.

In the second embodiment, a packet carries an extended source address consisting of a sequence or stack of interface identifiers instead of a single interface identifier. The source of a packet is identified by a source address consisting of e.g. an interface identifier located at a last position in the sequence. Further interface identifiers in the sequence relate to intermediate interfaces through which a packet has been forwarded. This enables subsystems to learn a sequence of interfaces or subsystems that a packet has crossed and to store this sequence as path information in the routing tables, as shown in Figure 4. Such extended source addresses enable subsystems to make aggregate topology updates, i.e. topology updates that relate to several destinations which can be reached through a same intermediate subsystem. This will be explained below.

### Updating path information

In the example of Figure 4, two subsystems 10 and 70 are directly connected to the subsystem 20, which is connected to the core subsystem 50. The routing table in routing data repository 29 enables device 25 to resolve destination address 11, 13 or 72, e.g. to route packets intended to applications A, D or E attached to those interfaces. The routing table in routing data repository 59 enables device 55 to resolve destination address 11, 13, 72, 62 or 32, e.g. to route packets intended to applications A, D, E, C or B.

Figure 5 shows the same network after a mobility event, namely subsystem 20 has disconnected from interface 51 of subsystem 50 and attached to interface 58 instead. Figure 5 also shows the routing data repository 59 after the routing table has been updated. The other routing tables are unchanged.

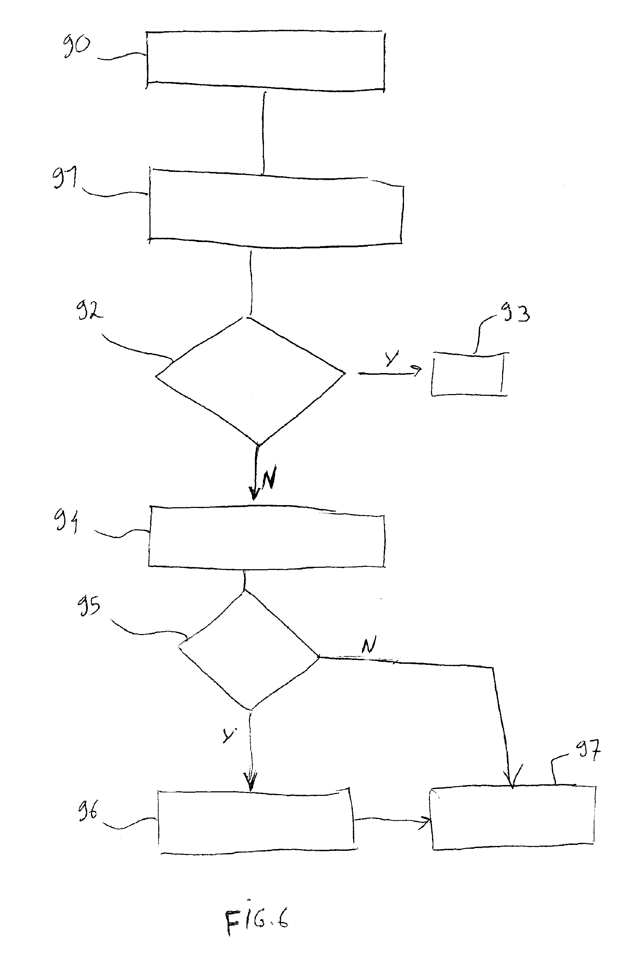

To create and maintain the data repositories shown on Figures 4 and 5, the data processing device of a subsystem executes a method which will be described in reference to Figure 6.
- Step 90: receiving a data packet at a first interface.
- Step 91: detecting the augmented source address of the data packet.
- Step 92: looking up the augmented source address in the routing data repository. If the augmented source address is already associated to the first interface, go to step 93 to terminate the process. This means that the received packet has followed the same route as a previously received packet, i.e. topology has not changed between the corresponding source and the subsystem under consideration. Else go to step 94.
- Step 94: generating and storing path information in the data repository to associate the augmented source address to the first interface.
- Step 95: looking up all entries in the routing data repository that share an intermediate subsystem identifier with the augmented source address of the received packet. If such entries are found, go to step 96. This means that there exists at least one intermediate subsystem on the path of the received packet that also connects other sources to the subsystem under consideration. Else go to step 97.
- Step 96: checking if the other sources are already associated to the first interface. If not, this means that the intermediate subsystem has moved. Then all the entries in the routing table that are affected by this move are updated to be associated to the first interface.
- Step 97: completing the augmented source address of the received packet by attaching an identifier of the first interface and forwarding the completed packet to the default interface or default downstream interface to enable the topology update to be propagated towards the core. Also send all the routing tables entries updated at step 96 to the default interface or default downstream interface to enable the topology update to be propagated towards the core.

This process will be illustrated in the case of the first packet sent by application A, e.g. towards application B, in the network of Figure 5, i.e. after the new attachment. At step 91, device 55 receives the packet with augmented source address 21/11 on interface 58. It determines that repository 59 already stores path information associated to augmented source address 21/11, i.e. information corresponding to Figure 4 because the topology has not yet been updated. At step 94, device 25 updates the routing table entry corresponding to address 21/11 as shown on Figure 5. At step 95, entries related to addresses 13 and 72 are found to contain subsystem identifier "2". At step 96, these entries are updated to be associated to interface 58, as shown on Figure 5. Hence, with a single packet, a plurality of routing table entries can be updated to reflect a topology change that affects all corresponding destinations. Step 97 is not performed in the core subsystem 50.

In an embodiment, subsystem 20 is a local network embedded in a vehicle, e.g. a train, and connected to the core subsystem 50 by wireless links. Subsystems 10 and 70 are terminals which are also located in the vehicle.

### Forwarding of traffic

The forwarding of traffic is done in a similar manner as in the first embodiment. However, when a communications subsystem detects a default of path information relating to the destination address in the routing data repository, it adds an interface identifier on the source stack of the data packet before sending the data packet through the default interface of the subsystem. Also when a communications subsystem resolves the destination address with a corresponding sequence of interface identifiers found in the routing data repository, it puts the whole sequence in the destination field of the packet. Then subsequent subsystems located downstream need only look up the interface identifiers located in the sequence to forward the packet, like in MPLS. By avoiding routing table look-ups, the packet forwarding can be made faster.

The second embodiment method for updating path information can be modified to be carried out in respect of specific control packets instead of all traffic packets, in a similar manner as in the first described embodiment.

The invention is not limited to the described embodiments. The network topologies, number of subsystems, number of interfaces, number of links, number of layers shown on the Figures are purely illustrative and not limitative. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

The invention may be implemented by means of hardware as well as software. The same item of hardware may represent several «modules». A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In the claims, any reference signs placed between parentheses shall not be construed as limiting the scope of the claims.

## Claims

1. A method for maintaining a routing data repository in a communications subsystem comprising a plurality of interfaces, the method comprising the steps of:
receiving (80, 90) a data packet through a first interface (20.2, 58) of the communications subsystem (20, 50), the data packet comprising a first source address (10.1, 21/11), and
retrieving (82) path information relating to the first source address from the routing data repository (29, 59),
determining that the retrieved path information associates the first source address to a second interface (50.1, 51) of the communications subsystem, and
in response to the determination, storing (85, 94) path information in the routing data repository, wherein the path information associates the first source address with the first interface instead of or in addition to the second interface.

2. A method in accordance with claim 1, further comprising the step of:
failing to retrieve (83) path information relating to the first source address from the routing data repository (29, 59),
sending (83, 97) the data packet through a default downstream interface (20.3) of the communications subsystem (20), wherein the default downstream interface is directly or indirectly connected to a core communications subsystem (50).

3. A method in accordance with claim 1, wherein the received data packet comprises a first augmented source address (21/11), the first augmented source address comprising the first source address (11) and a first sequence of at least one intermediate subsystem identifier (21) attached to the first source address,
wherein in the step of storing (94), path information which associates the first augmented source address with the first interface is stored in the routing data repository.

4. A method in accordance with claim 3, the method further comprising the steps of:
retrieving (95) path information relating to a second augmented source address (21/13) from the routing data repository, wherein the second augmented source address comprises a second source address (13) and a second sequence of at least one intermediate subsystem identifier (21) attached to the second source address, wherein the first and second sequences comprise a same intermediate subsystem identifier,
determining (96) that the retrieved path information associates the second augmented source address to the second interface (51) of the communications subsystem, and
in response to the determination, storing (96) path information in the routing data repository to associate the second augmented source address with the first interface instead of or in addition to the second interface.

5. A method in accordance with claim 3 or 4, further comprising the steps of:
attaching (97) an identifier of the communications subsystem to the first augmented source address of the received data packet to generate a further augmented source address,
sending (97) the data packet comprising the further augmented source address through a default downstream interface of the communications subsystem, wherein
the default downstream interface is directly or indirectly connected to a core communications subsystem.

6. A method in accordance with any one of claims 2 to 5, wherein the intermediate subsystem identifier is comprised in an intermediate interface identifier (21).

7. A method in accordance with any one of claims 1 to 6, further comprising the steps of:
effecting (88) a network attachment procedure between the communications subsystem (20) and a mobile communications subsystem (10) to set up a bidirectional communications channel between the first interface (20.2) and an interface (10.2) of the mobile communications subsystem, and
sending (89) the data packet from the mobile communications subsystem to the first interface as a result of the network attachment procedure.

8. A method in accordance with any one of claims 1 to 7, wherein the data packet is a traffic data packet comprising a destination address.

9. A method in accordance with claim 2 or 5, wherein the core communications subsystem (50) is fixed.

10. A communications subsystem (20) comprising:
a plurality of interfaces (20.1, 20.2, 20.3; 21, 22, 23),
a routing data repository (29) for storing path information associating addresses to the interfaces,
a packet forwarding module (25) adapted to detect a destination address of a received data packet and to switch the data packet between the interfaces as a function of the stored path information, and
a routing update module (25) adapted to detect a source address (10.1) in a data packet received through a first interface (20.2) of the communications subsystem,
retrieve path information relating to the source address from the routing data repository, determine that the retrieved path information associates the source address to a second interface (20.1) of the communications subsystem, and store path information in the routing data repository, wherein the path information associates the source address with the first interface instead of or in addition to the second interface.

11. A communications subsystem in accordance with claim 10, wherein the plurality of interfaces comprises a default upstream interface (20.3) directly or indirectly connected to a core communications subsystem,
wherein the packet forwarding module (25) is adapted to detect a default of path information relating to the destination address of the received data packet in the routing data repository, and to switch the data packet to the default upstream interface of the communications subsystem in response to the detection.

12. A communications subsystem in accordance with claim 10 or 11, wherein the packet forwarding module (25) is adapted to retrieve path information associating the destination address (10.1) of the received data packet to an identified interface (20.1) of the communications subsystem from the routing data repository (29), and to switch the data packet to the identified interface in response to the retrieval.

13. A communications subsystem in accordance with any one of claims 10 to 12, wherein the routing update module (25) is adapted to send the data packet comprising the source address through a default downstream interface (20.3) of the communications subsystem.

14. A communications system comprising a collection of communications subsystems (10, 20, 30, 40, 50, 60, 70) in accordance with any one of claims 10 to 13, wherein the communications subsystems of the collection are interconnected by communications links respectively binding an output interface of a subsystem to an input interface of a subsystem.
